(19) Europäisches Patentamt
European Patent Office
Office européen des brevets

(11) **EP 3 819 823 B1**

(12) **EUROPEAN PATENT SPECIFICATION**

(45) Date of publication and mention
of the grant of the patent:
**26.04.2023 Bulletin 2023/17**

(21) Application number: **21163231.0**

(22) Date of filing: **17.03.2021**

(51) International Patent Classification (IPC):
*G06V 10/25* (2022.01)    *G06V 10/52* (2022.01)
*G06V 20/13* (2022.01)    *G06V 20/66* (2022.01)
*G06V 10/774* (2022.01)

(52) Cooperative Patent Classification (CPC):
**G06V 10/25; G06V 10/52; G06V 10/774;
G06V 20/13; G06V 20/66;** G06V 2201/11

(54) **OBJECT DETECTION METHOD AND APPARATUS, COMPUTER SYSTEM, AND READABLE STORAGE MEDIUM**

OBJEKTERKENNUNGSMETHODE UND -GERÄT, COMPUTERSYSTEM UND COMPUTERLESBARER DATENTRÄGER

PROCÉDÉ ET APPAREIL DE DÉTECTION D'OBJETS, SYSTÈME INFORMATIQUE ET SUPPORT DE DONNÉES LISIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.08.2020 CN 202010878201**

(43) Date of publication of application:
**12.05.2021 Bulletin 2021/19**

(73) Proprietor: **BEIJING BAIDU NETCOM SCIENCE AND TECHNOLOGY CO., LTD.
Beijing, 100085 (CN)**

(72) Inventors:
• **ZHAO, Penghao
Beijing 100085 (CN)**
• **ZHANG, Haibin
Beijing 100085 (CN)**
• **LI, Shupeng
Beijing 100085 (CN)**
• **SHI, En
Beijing 100085 (CN)**
• **XIE, Yongkang
Beijing 100085 (CN)**

(74) Representative: **Laufhütte, Dieter
Lorenz Seidler Gossel
Rechtsanwälte Patentanwälte
Partnerschaft mbB
Widenmayerstraße 23
80538 München (DE)**

(56) References cited:
**CN-B- 107 341 517**

• **YANG FAN ET AL: "Exploit All the Layers: Fast and Accurate CNN Object Detector with Scale Dependent Pooling and Cascaded Rejection Classifiers", 2016 IEEE CONFERENCE ON COMPUTER VISION AND PATTERN RECOGNITION (CVPR), IEEE, 27 June 2016 (2016-06-27), pages 2129-2137, XP033021392, DOI: 10.1109/CVPR.2016.234 [retrieved on 2016-12-09]**
• **LI LIU ET AL: "Deep Learning for Generic Object Detection: A Survey", ARXIV.ORG, CORNELL UNIVERSITY LIBRARY, 201 OLIN LIBRARY CORNELL UNIVERSITY ITHACA, NY 14853, 6 September 2018 (2018-09-06), XP081467102,**
• **SINGH BHARAT ET AL: "An Analysis of Scale Invariance in Object Detection - SNIP", 2018 IEEE/CVF CONFERENCE ON COMPUTER VISION AND PATTERN RECOGNITION, IEEE, 18 June 2018 (2018-06-18), pages 3578-3587, XP033476328, DOI: 10.1109/CVPR.2018.00377 [retrieved on 2018-12-14]**

EP 3 819 823 B1

## Description

## TECHNICAL FIELD

The present disclosure relates to the fields of computer vision and image processing, and more specifically to an object detection method and apparatus, a computer system, and a readable storage medium.

## BACKGROUND

In recent years, remarkable progress in computer vision technologies represented by object detection has been witnessed. The application of an object detection technology brings better experience and higher efficiency to many industries, while also reducing costs. For example, in the field of automated driving of automobiles, the object detection technology can be employed to detect pedestrians, vehicles, and obstacles, thereby improving the safety and convenience of automobile driving; in the security monitoring field, the object detection technology can be employed to monitor information such as the appearance and movement of particular persons or items; and in the medical diagnosis field, the object detection technology can be employed to discover lesion areas and count the number of cells.

However, in some industries or fields, an object is extremely small relative to an image acquisition area, with a ratio being usually in the range of 1: 100 to 1: 1000. As a result, it is very difficult or even impossible to employ current object detection technologies to implement detection of such an extremely small object in a picture shot for an image acquisition area. For example, in the industrial field, when a pseudo solder is to be detected in an X-ray scanned image of a welded steel plate or a flaw is to be detected in a scanned image of a glass cover of a mobile phone, because a proportion of the pseudo solder or flaw in the entire picture is very small, detection of such extremely small objects cannot be implemented directly using the current object detection technologies.

YANG FAN ET AL: "Exploit All the Layers: Fast and Accurate CNN Object Detector with Scale Dependent Pooling and Cascaded Rejection Classifiers", 2016 IEEE CONFERENCE ON COMPUTER VISION AND PATTERN RECOGNITION (CVPR), IEEE, 27 June 2016 (2016-06-27), pages 2129-2137 discloses method for scale-dependent polling (SDP). The SDP method examines the scale (height) of each object proposal and pools the features from a corresponding convolutional layer depending on the height.

## SUMMARY

According to a first aspect of the present disclosure, an embodiment of the present disclosure discloses an computer-implemented object detection method and an object detection apparatus, according to the claimed invention.

According to a third aspect of the present disclosure, an embodiment of the present disclosure discloses a computer program product, comprising program code portions that, perform the method described in the present disclosure when the computer program product is executed on one or more computing devices.

According to a fourth aspect of the present disclosure, an embodiment of the present disclosure discloses a computer-readable storage medium storing a computer program that, when executed by a processor of a computer system, causes the computer system to perform the foregoing object detection method.

According to one or more embodiments of the present disclosure, the ratios of the objects in the first training data set are counted to determine the at least one typical object ratio in the first training data set; the at least one picture scaling size is determined based on the at least one typical object ratio; the training pictures in the first training data set are scaled according to the at least one picture scaling size; the scaled training pictures are sliced, to obtain the second training data set; and the object detection model is trained using the second training data set. Therefore, in the case of a very small object ratio relative to the to-be-detected picture, the trained object detection model can still accurately detect an object in the to-be-detected picture, and then can complete, with high quality and without manual intervention, a task of detecting a small obj ect.

## BRIEF DESCRIPTION OF THE DRAWINGS

The drawings exemplarily show embodiments and form a part of the specification, and are used to illustrate exemplary implementations of the embodiments together with a written description of the specification. The embodiments shown are merely for illustrative purposes and do not limit the scope of the claims. Throughout the drawings, like reference signs denote like but not necessarily identical elements.

Fig. 1 is a flowchart showing an object detection method according to one or more examples of the present application;
Fig. 2a is a schematic diagram showing an example of a scaled training picture;
Fig. 2b is a schematic diagram showing slicing the scaled training picture shown in Fig. 2a;
Fig. 3 is a flowchart showing step S105 in the object detection method shown in Fig. 1;
Fig. 4 is a structural block diagram showing an object detection apparatus according to one or more examples of the present application; and
Fig. 5 is a structural block diagram showing an exemplary computer system that can be used to implement one or more examples of the present application.

## DETAILED DESCRIPTION

The present disclosure will be further described in detail below with reference to the drawings and embodiments. It can be understood that embodiments described herein are used merely to explain a related invention, rather than limit the invention. It should be additionally noted that, for ease of description, only parts related to the related invention are shown in the drawings.

It should be noted that the embodiments in the present disclosure and features in the embodiments can be combined with each other without conflict. If the number of elements is not specifically defined, there may be one or more elements, unless otherwise expressly indicated in the context. In addition, numbers of steps or functional modules used in the present disclosure are used merely to identify the steps or functional modules, rather than limit either a sequence of performing the steps or a connection relationship between the functional modules.

Currently, there are the following several solutions for small-object detection: (1) Using feature pyramid network (FPN) layer to perform multi-scale fusion of features in an input picture, to improve the effect of small object detection. (2) Enlarging an input picture by different scales, performing object detection on input pictures of different enlarged scales, and then merging the results of the object detection on the input pictures of the different enlarged scales. (3) Slicing a training picture and modifying annotation information associated with the training picture, to obtain training image slices and their associated annotation information; using the training image slices and their associated annotation information to train an object detection model; and using the trained object detection model to perform object detection.

The solutions above have the following disadvantages: Solution (1) can improve the detection effect of small objects with an object ratio of 1: 10, and is not suitable, for example, for detection of extremely small objects with an object ratio of 1:100. Solution (2) can increase a size of an object correspondingly. However, due to limitations of a video memory of a graphics processing unit (GPU), a size of an input picture of an object detection model usually can be about 2,000 pixels, and therefore Solution (2) is apparently not suitable for detection of extremely small objects in which an input image needs to be scaled up to 5,000 pixels or even 10,000 pixels. In Solution (3), different training image slice sizes need to be manually selected for different training data sets, and the trained object detection model is used to perform object detection on to-be-detected pictures as a whole. Therefore, Solution (3) is not suitable for detection of extremely small objects.

The current small object detection solutions have very poor detection effects for extremely small objects with a very small object ratio, and it is impossible to train, with high quality and without manual intervention, an object detection model to complete a task of detecting the extremely small objects.

In view of the above problems that exist in the current small object detection solutions, the present disclosure provides an object detection method and apparatus, to complete, with high quality and without manual intervention, a task of detecting an extremely small object. The object detection method and apparatus according to the embodiments of the present disclosure can be applied in scenarios such as industrial quality inspection and farm aerial photography. The object detection method and apparatus according to the embodiments of the present disclosure are described in detail below in conjunction with the accompanying drawings.

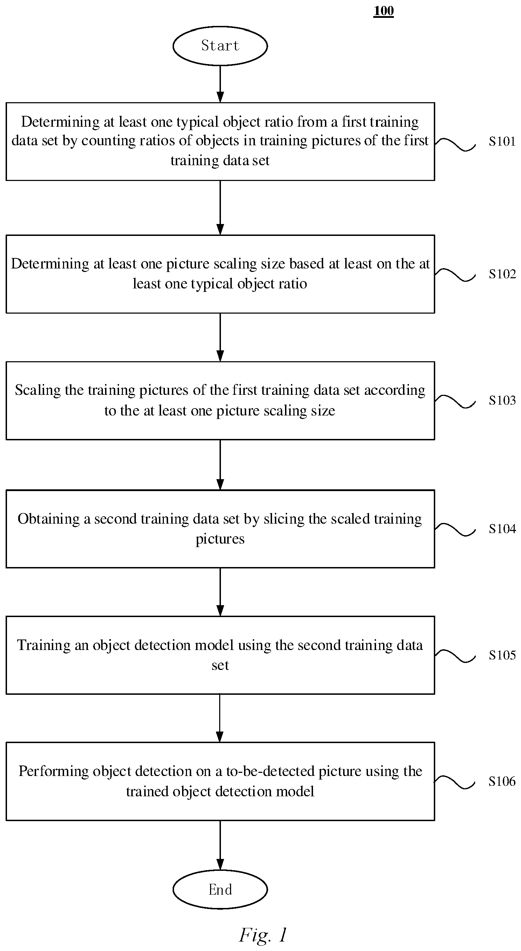

Fig. 1 is a flowchart showing an object detection method 100 according to an embodiment of the present application. As shown in Fig. 1, the object detection method 100 may comprise: step S101: determining at least one typical object ratio from a first training data set by counting ratios of objects in training pictures of the first training data set; step S102: determining at least one picture scaling size at least based on the at least one typical object ratio; step S103: scaling the training pictures of the first training data set according to the at least one picture scaling size; step S104: obtaining a second training data set by slicing the scaled training pictures; step S105: training an object detection model using the second training data set; and step S106: performing object detection on a to-be-detected picture using the trained object detection model.

In the object detection method according to the present application, the at least one picture scaling size is adaptively determined based on the typical object ratio of the first training data set; the training pictures of the first training data set are scaled according to the at least one picture scaling size; the scaled training pictures are sliced, to obtain the second training data set; and the object detection model is trained by using the second training data set. Therefore, in the case of a very small object ratio relative to the to-be-detected picture, the trained object detection model can still accurately detect an object in the to-be-detected picture, and then can complete, with high quality and without manual intervention, a task of detecting an extremely small object.

In some examples, the first training data set comprises a plurality of training pictures and annotation information associated with the plurality of training pictures. Any one of the training pictures may contain one or more objects. An object ratio of any one of the objects refers to a proportion of a size of an object detection box of the object to an overall size of the training picture. Annotation information associated with the training picture comprises coordinate information associated with object detection boxes on the training picture.

According to the claimed invention, the ratios of all the objects in the training pictures of the first training data set be clustered, to obtain the at least one typical object ratio of the first training data set. For example, ratios of all objects in training pictures in any training data set A be clustered, to obtain three typical object ratios R1, R2, and R3 of the training data set A.

According to the claimed invention, to facilitate training of the object detection model, sizes of most of object detection boxes on the training pictures in the first training data set be scaled to near a fixed size. Therefore, the at least one picture scaling size be determined based on the at least one typical object ratio of the first training data set and the fixed size. For example, assuming that the sizes of most of the object detection boxes on the training pictures in the training data set A need to be scaled to a fixed size $T_0$, the fixed size $T_0$ may divide the three typical object ratios R1, R2, and R3 in the training data set A, to determine three picture scaling sizes $\frac{T_0}{R_1}$, $\frac{T_0}{R_2}$, and $\frac{T_0}{R_3}$.

In some embodiments, to improve the training effect of the object detection model, the at least one picture scaling size may be further determined based on an optimal detection size for the object detection model. In other words, the at least one picture scaling size may be determined based on the at least one typical obj ect ratio and the optimal detection size for the obj ect detection model of the first training data set, such that the sizes of most of the object detection boxes on the training pictures in the first training data set may be scaled to near the optimal detection size for the object detection model. For example, for the training data set A, assuming that the optimal detection size for the object detection model is T, the optimal detection size T for the object detection model may be divided by the three typical object ratios R1, R2, and R3 in the training data set A, to determine three picture scaling sizes $\frac{T}{R_1}$, $\frac{T}{R_2}$, and $\frac{T}{R_3}$.

In some embodiments, the scaling the training pictures of the first training data set according to the at least one picture scaling size may comprise: for each training picture of the training pictures in the first training data set, scaling the training picture to each of the at least one picture scaling size. For example, each training picture in the training data set A may be scaled three times according to the picture scaling sizes $\frac{T}{R_1}$, $\frac{T}{R_2}$, and $\frac{T}{R_3}$, such that most of the object detection boxes on the training pictures in the training data set A can be scaled to near the optimal detection size T of the object detection model.

Alternatively, in some embodiments, the scaling the training pictures of the first training data set according to the at least one picture scaling size may comprise: dividing, based on the at least one typical object ratio of the first training data set, the training pictures in the first training data set into at least one training picture group, and scaling a training picture in each training picture group to a corresponding picture scaling size. For example, for the training data set A, the training pictures in the training data set A may be divided into three training picture groups A1, A2, and A3 based on the three typical object ratios R1, R2, and R3 in the training data set A, and training pictures in the three training picture groups A1, A2, and A3 are scaled to the three picture scaling sizes $\frac{T}{R_1}$, $\frac{T}{R_2}$, and $\frac{T}{R_3}$, respectively. Compared with scaling each training picture in the training data set A three times according to the picture scaling sizes $\frac{T}{R_1}$, $\frac{T}{R_2}$, and $\frac{T}{R_3}$, this embodiment has higher processing efficiency but has a poorer training effect.

In an application scenario that requires detection of an extremely small object, the typical object ratio of the first training data set, for example, ranges from 1: 100 to 1: 1000. A size of each scaled training picture is very large, which will cause the video memory of the graphics processing unit to be insufficient. Therefore, the scaled training pictures need to be sliced. In some embodiments, the obtaining the second training data set by slicing the scaled training pictures comprises: slicing the scaled training pictures, to obtain a set of training image slices; transforming annotation information, associated with the training pictures, in the first training data set to obtain annotation information associated with training image slices in the set of training image slices; and forming the second training data set with the set of training image slices and the annotation information associated with the training image slices of the set of training image slices. Training the object detection model based on the second training data set can improve a capability of the object detection model for detection of the extremely small object, while avoiding the insufficient video memory of the graphics processing unit.

Here, the transforming annotation information, associated with the training pictures, of the first training data set refers to transforming coordinate information, associated with the object detection boxes on the training pictures, of the first training data set. In other words, for any object detection box on any training picture in the first training data set, coordinate information associated with the object detection box is transformed from coordinate information that is based on the training picture to coordinate information that is based on a training image slice containing the object detection box, wherein the training image slice is obtained by slicing the training picture.

In some embodiments, an input picture size of the object detection model may be used as a training image slice size, to slice the scaled training pictures. In other words, the training image slice size does not need to be set manually, and the input picture size of the object detection model may be directly used to slice the scaled training pictures.

In some embodiments, in the case that the input picture size of the object detection model is used as the training image slice size, a movement step that is less than a difference between the input picture size of the object detection model and the optimal detection size may be used, to slice the scaled training pictures. This can ensure that each of the object detection boxes on the scaled training pictures can completely appear in the at least one training image slice.

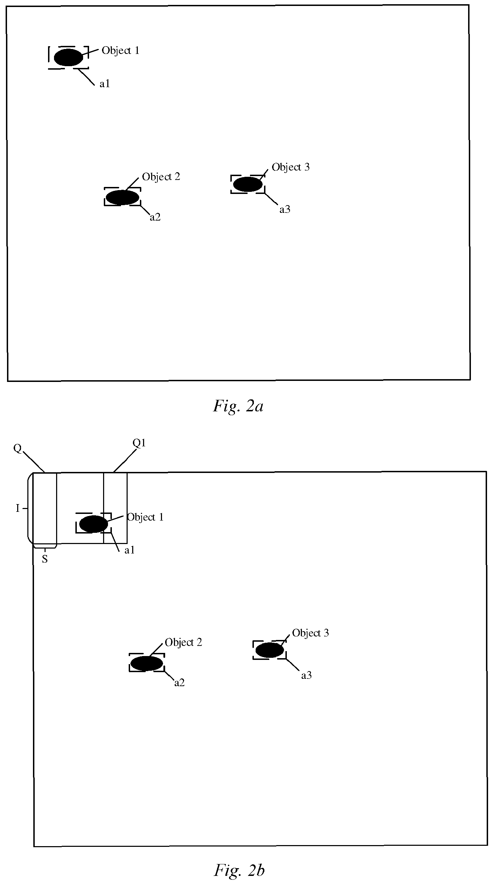

For example, assuming that the input picture size of the object detection model is I and the optimal detection size is T, the training image slice size may be set to I, and the movement step S may be set to be less than $I - T$ (that is, $S < I - T$, for example, $S = I - 2T$). Fig. 2a is a schematic diagram showing an example of a scaled training picture. Fig. 2b is a schematic diagram showing slicing the scaled training picture shown in Fig. 2a. As shown in Figs. 2a and 2b, in the case that the training image slice size is I and the movement step is S, a sliding window of size $I \times I$ slides in directions of the horizontal axis and the vertical axis from the top-left vertex of the scaled training picture, to slice the scaled training picture. A distance, that is, the movement step, for which the sliding window slides each time is S, and each time the sliding window slides, a training image slice can be obtained, for example, training image slices Q and Q1. In some cases, to obtain more training image slices, the movement step S may be appropriately reduced.

In some embodiments, in the case that the input picture size of the object detection model is used as the training image slice size and the movement step that is less than the difference between the input picture size of the object detection model and the optimal detection size is used to slice the scaled training pictures, each of the object detection boxes on the scaled training pictures can completely appear in the at least one training image slice. To reduce repeated detections of an overlapping area between the training image slices, for any training image slice in the second training data set, coordinate information associated with an incomplete object detection box on the training image slice may be removed from the annotation information associated with the training image slice. For example, as shown in Fig. 2b, an object detection box a1 is incomplete in the training image slice Q, and therefore coordinate information associated with the object detection box a1 may be removed from the annotation information associated with the training image slice Q. Conversely, the object detection box a1 completely appears in the training image slice Q1, and therefore the coordinate information associated with the object detection box a1 is retained in the annotation information associated with the training image slice Q1.

In some embodiments, coordinate information associated with object detection boxes with sizes significantly different from the optimal detection size of the object detection model may be removed from the annotation information associated with the training image slices in the second training data set, such that these object detection boxes with sizes significantly different from the optimal detection size of the object detection model do not participate in training of the object detection model. This can improve the training effect of the object detection model, while improving the training efficiency of the object detection model.

In some embodiments, in the application scenario that requires detection of an extremely small object, due to very small ratios of objects in the training pictures of the first training data set, most areas of each training picture are background areas that do not contain an object detection box. If only a training image slice containing an object detection box is used to train the object detection model, it may cause many false detections when the trained object detection model is subsequently used to detect a background area of a to-be-detected picture. To avoid such a case, a training image slice that contains an object detection box, a training image slice that does not contain an object detection box, and annotation information associated with the training image slices of the second training data set may be used to train the object detection model. This can strengthen the object detection model in learning the background areas that do not contain an object detection box, and can reduce false detections of the background areas that do not contain an object detection box during implementation of the detection of an extremely small object.

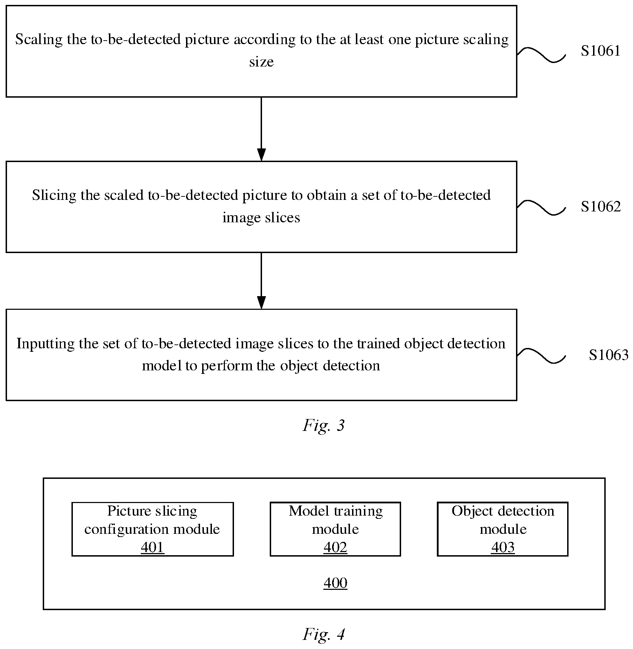

In some embodiments, as shown in Fig. 3, the performing the object detection on a to-be-detected picture using the trained object detection model may comprise: step S1061: scaling the to-be-detected picture according to the at least one picture scaling size; step S1062: slicing the scaled to-be-detected picture, to obtain a set of to-be-detected image slices; and step S1063: inputting the set of to-be-detected image slices to the trained object detection model to perform the object detection. Scaling and slicing the to-be-detected picture can not only avoid the insufficient video memory of the graphics processing unit, but can also implement detection of an extremely small object for a to-be-detected image slice, thereby implementing the detection of an extremely small object for the to-be-detected picture as a whole.

In some embodiments, an input picture size of the object detection model may be used as a to-be-detected image slice size, to slice the scaled to-be-detected picture. This can avoid the insufficient video memory of the graphics processing unit. In other words, the to-be-detected image slice size may be set to be the same as the training image slice size, that is, equal to the input picture size of the object detection model. It should be understood that the to-be-detected image slice size may also be appropriately increased to be greater than the input picture size of the object detection model, thereby improving the slicing efficiency of the to-be-detected picture.

In some embodiments, a movement step that is less than a difference between the input picture size of the object detection model and an optimal detection size may be used, to slice the scaled to-be-detected picture. For example, the movement step for slicing the scaled to-be-detected picture may be set to be equal to the movement step for slicing the scaled training picture. This can ensure that each object detection box on the scaled to-be-detected picture can completely appear in at least one to-be-detected image slice.

In some embodiments, for any to-be-detected image slice in the to-be-detected image slice set, if an object detection box overlapping an edge of the to-be-detected image slice is detected on the to-be-detected image slice, the object detection box is discarded. For example, when the trained object detection model is used to perform object detection on a to-be-detected image slice, if an object detection box on the to-be-detected image slice is found to be incomplete, the object detection box may be discarded (that is, the object detection box is not considered as detected). This can reduce repeated detections of an overlapping area between to-be-detected image slices.

In some embodiments, the inputting the set of to-be-detected image slices to the trained object detection model to perform the object detection may comprises: obtaining, using the trained object detection model, respective coordinate information associated with respective object detection boxes on to-be-detected image slices in the set of to-be-detected image slices; and transforming the respective coordinate information associated with the respective object detection boxes on the to-be-detected image slices in the set of to-be-detected image slices into respective coordinate information that is based on the to-be-detected picture. For example, for any object detection box on any to-be-detected image slice, coordinate information associated with the object detection box may be transformed from coordinate information that is based on the to-be-detected image slice to coordinate information that is based on the to-be-detected picture. In this way, a relatively intuitive object detection result for the to-be-detected picture can be obtained.

In conclusion, the object detection method according to the one or more examples of the present application can be used to complete, with high quality and without manual intervention, a task of detecting an extremely small object, and is applicable to scenarios such as industrial quality inspection and farm aerial photography.

Fig. 4 is a structural block diagram showing an object detection apparatus 400 according to an embodiment of the present application. As shown in Fig. 4, the object detection apparatus 400 may comprises a picture slicing configuration module 401, a model training module 402, and an object detection module 403. The picture slicing configuration module 401 is configured to: determine at least one typical object ratio from a first training data set by counting ratios of objects in training pictures of the first training data set; determine at least one picture scaling size at least based on the at least one typical object ratio; and scale the training pictures of the first training data set according to the at least one picture scaling size. The model training module 402 is configure to: obtain a second training data set by slicing the scaled training pictures; and train an object detection model using the second training data set. The object detection module 403 is configured to: perform object detection on a to-be-detected picture using the trained object detection model.

In this embodiment, for exemplary implementations and technical effects of the object detection apparatus 400 and its corresponding functional modules, refer to the relevant description in the embodiment described in Fig. 1, and details are not repeated herein.

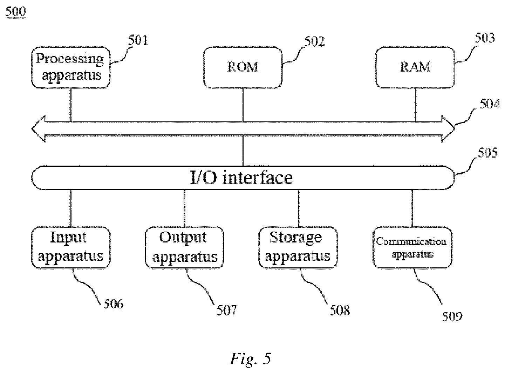

Fig. 5 is a structural block diagram showing an exemplary computer system that can be used to implement one or more examples of the present application. The following describes, in conjunction with Fig. 5, the computer system 500 that is suitable for implementation of the one or more examples of the present application. It should be understood that the computer system 500 shown in Fig. 5 is merely an example, and shall not impose any limitation on the function and scope of use of the one or more examples of the present application.

As shown in Fig. 5, the computer system 500 may comprise a processing apparatus (for example, a central processing unit, a graphics processing unit, etc.) 501, which may perform appropriate actions and processing according to a program stored in a read-only memory (ROM) 502 or a program loaded from a storage apparatus 508 to a random access memory (RAM) 503. The RAM 503 additionally stores various programs and data for the operation of the computer system 500. The processing apparatus 501, the ROM 502, and the RAM 503 are connected to each other through a bus 504. An input/output (I/O) interface 505 is also connected to the bus 504.

Generally, the following apparatuses may be connected to the I/O interface 505: an input apparatus 506, for example, including a touchscreen, a touch panel, a camera, an accelerometer, a gyroscope, etc.; an output apparatus 507, for example, including a liquid crystal display (LCD), a speaker, a vibrator, etc.; the storage apparatus 508, for example, including a flash memory (Flash Card), etc.; and a communication apparatus 509. The communication apparatus 509 may enable the computer system 500 to perform wireless or wired communication with other devices to exchange data. Although Fig. 5 shows the computer system 500 having various apparatuses, it should be understood that it is not required to implement or have all of the shown apparatuses. It may be an alternative to implement or have more or fewer apparatuses. Each block shown in Fig. 5 may represent one apparatus, or may represent a plurality of apparatuses in different circumstances.

In particular, according to an example of the present application, the process described above with reference to the flowcharts may be implemented as a computer software program. For example, an example of the present application provides a computer-readable storage medium that stores a computer program, the computer program containing program code for performing the method 100 shown in Fig. 1. In such an embodiment, the computer program may be downloaded and installed from a network through the communication apparatus 509, or installed from the storage apparatus 508, or installed from the ROM 502. When the computer program is executed by the processing apparatus 501, the above-mentioned functions defined in the apparatus of the example of the present application are implemented.

It should be noted that a computer-readable medium described in the example of the present application may be a computer-readable signal medium, or a computer-readable storage medium, or any combination thereof. The computer-readable storage medium may be, for example but not limited to, electric, magnetic, optical, electromagnetic, infrared, or semiconductor systems, apparatuses, or devices, or any combination thereof. A more specific example of the computer-readable storage medium may include, but is not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the one or more examples of the present application, the computer-readable storage medium may be any tangible medium containing or storing a program which may be used by or in combination with an instruction execution system, apparatus, or device. In the one or more examples of the present application, the computer-readable signal medium may include a data signal propagated in a baseband or as a part of a carrier, the data signal carrying computer-readable program code. The propagated data signal may be in various forms, including but not limited to an electromagnetic signal, an optical signal, or any suitable combination thereof. The computer-readable signal medium may also be any computer-readable medium other than the computer-readable storage medium. The computer-readable signal medium can send, propagate, or transmit a program used by or in combination with an instruction execution system, apparatus, or device. The program code contained in the computer-readable medium may be transmitted by any suitable medium, including but not limited to: electric wires, optical cables, radio frequency (RF), etc., or any suitable combination thereof.

The foregoing computer-readable medium may be contained in the foregoing computer system 500. Alternatively, the computer-readable medium may exist independently, without being assembled into the computer system 500. The foregoing computer-readable medium carries one or more programs, and the one or more programs, when executed by the computer system, cause the computer system to perform the following: determining at least one typical object ratio from a first training data set by counting ratios of objects in training pictures of the first training data set; determining at least one picture scaling size based on the at least one typical object ratio; scaling the training pictures of the first training data set according to the at least one picture scaling size; obtaining a second training data set by slicing the scaled training pictures; training an object detection model using the second training data set; and performing object detection on a to-be-detected picture using the trained object detection model.

Computer program code for performing operations of the embodiments of the present disclosure can be written in one or more programming languages or a combination thereof, wherein the programming languages comprise object-oriented programming languages, such as Java, Smalltalk, and C++, and further comprise conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the circumstance involving a remote computer, the remote computer may be connected to a computer of a user over any type of network, comprising a local area network (LAN) or wide area network (WAN), or may be connected to an external computer (for example, connected over the Internet using an Internet service provider).

The flowcharts and block diagrams in the accompanying drawings illustrate the possibly implemented architecture, functions, and operations of the system, method, and computer program product according to various embodiments of the present disclosure. In this regard, each block in the flowchart or block diagram may represent a module, program segment, or part of code, and the module, program segment, or part of code contains one or more executable instructions for implementing the logical functions. It should also be noted that, in some alternative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes functions or operations, or may be implemented by a combination of dedicated hardware and computer instructions.

The related modules described in the embodiments of the present disclosure may be implemented by means of software, or may be implemented by means of hardware. The described modules may also be arranged in the processor, which for example may be described as: a processor, comprising a picture slicing configuration module, a model training module, and an object detection module. Names of these modules do not constitute a limitation on the modules themselves under certain circumstances.

## Claims

1. A computer-implemented object detection method, comprising

   determining (101) at least one typical object ratio from a first training data set by clustering the counted ratios of objects in training pictures of the first training data set, wherein an object ratio refers to a proportion of a size of an object detection box of the object to an overall size of a training picture, and wherein a typical object ratio is the value of a cluster center;
   determining (102) at least one picture scaling size that corresponds one-to-one with the at least one typical object ratio by dividing a fixed size (T0) of the object detection box with the at least one typical object ratio;
   scaling (103) the training pictures of the first training data set according to the at least one picture scaling size;
   obtaining (104) a second training data set by slicing the scaled training pictures based on an input picture size for an object detection model to be trained;
   training (105) the object detection model using the second training data set; and
   performing (106) object detection on a to-be-detected picture using the trained object detection model.

2. The object detection method according to claim 1, wherein the fixed size of the object detection box comprises an optimal detection size for the object detection model, wherein the optimal detection size is a predetermined size of the object for which the object detection model is suitable for detection.

3. The object detection method according to any one of the foregoing claims, wherein the scaling the training pictures of the first training data set comprises:
   for each training picture of the training pictures in the first training data set, scaling the training picture to each of the at least one picture scaling size.

4. The object detection method according to any one of the foregoing claims, wherein the obtaining the second training data set comprises:

   slicing the scaled training pictures to obtain a set of training image slices;
   transforming annotation information, associated with the training pictures, of the first training data set to obtain annotation information associated with training image slices of the set of training image slices; and
   generating the second training data set with the set of training image slices and the annotation information associated with the training image slices of the set of training image slices.

5. The object detection method according to claim 4, wherein the slicing the scaled training pictures comprises using an input picture size for the object detection model as a training image slice size to slice the scaled training pictures.

6. The object detection method according to claim 5, wherein the slicing the scaled training pictures further comprises using a movement step less than a difference between the input picture size for the object detection model and an optimal detection size to slice the scaled training pictures.

7. The object detection method according to claim 6, further comprising:
   for each training image slice of the second training data set, removing coordinate information associated with an incomplete object detection box on the training image slice from the annotation information associated with the training image slice.

8. The object detection method according to any one of the foregoing claims, wherein the second training data set comprises training image slices that include an object detection box, training image slices that do not include an object detection box, and annotation information associated with the training image slices in the second training data set.

9. The object detection method according to any one of the foregoing claims, wherein the performing the object detection comprises:

   scaling the to-be-detected picture according to the at least one picture scaling size;
   slicing the scaled to-be-detected picture to obtain a set of to-be-detected image slices; and
   inputting the set of to-be-detected image slices to the trained object detection model to perform the object detection.

10. The object detection method according to claim 9, wherein the slicing the scaled to-be-detected picture comprises using an input picture size for the object detection model as a to-be-detected image slice size to slice the scaled to-be-detected picture, and optionally using a movement step less than a difference between the input picture size for the object detection model and an optimal detection size to slice the scaled to-be-detected picture.

11. The object detection method according to claim 10, wherein the performing the object detection comprises:
for each to-be-detected image slice of the set of to-be-detected image slices, discarding an object detection box on the to-be-detected image slice in response to detecting that the object detection box overlaps an edge of the to-be-detected image slice.

12. The object detection method according to claim 9, wherein the inputting the set of to-be-detected image slices to the trained object detection model to perform the object detection comprises:

obtaining, using the trained object detection model, coordinate information associated with respective object detection boxes on to-be-detected image slices of the set of to-be-detected image slices; and
transforming the coordinate information associated with the respective object detection boxes on the to-be-detected image slices of the set of to-be-detected image slices into coordinate information that is based on the to-be-detected picture.

13. An object detection apparatus, comprising

a picture slicing configuration module (401) configured to:

determine at least one typical object ratio from a first training data set by clustering the counted ratios of objects in training pictures of the first training data set, wherein an object ratio refers to a proportion of a size of an object detection box of the object to an overall size of a training picture, and wherein a typical object ratio is the value of a cluster center;
determine at least one picture scaling size that corresponds one-to-one with the at least one typical object ratio by dividing a fixed size (T0) of the object detection box with the at least one typical object ratio; and
scale the training pictures of the first training data set according to the at least one picture scaling size;

a model training module (402) configured to:

obtain a second training data set by slicing the scaled training pictures based on an input picture size for an object detection model to be trained; and
train the object detection model using the second training data set; and

an object detection module (403) configured to:
perform object detection on a to-be-detected picture using the trained object detection model.

14. A computer program product comprising program code portions for performing the method of any one of claims 1 to 12 when the computer program product is executed on one or more computing devices.

15. A computer-readable storage medium that stores a computer program, wherein the computer program, when executed by a processor of a computer system, causes the computer system to perform the object detection method according to any one of claims 1 to 12.

**Patentansprüche**

1. Computer-implementiertes Objektdetektionsverfahren, umfassend:

Bestimmen (101) von zumindest einem typischen Objektverhältnis aus einem ersten Trainingsdatensatz durch Clustern der gezählten Verhältnisse von Objekten in Trainingsbildern des ersten Trainingsdatensatzes, wobei sich ein Objektverhältnis auf eine Proportion einer Größe eines Objektdetektionskästchens des Objekts zu einer Gesamtgröße eines Trainingsbildes bezieht, und wobei ein typisches Objektverhältnis der Wert eines Clusterzentrums ist;
Bestimmen (102) zumindest einer Bildskalierungsgröße, die eins-zu-eins dem zumindest einen typischen Objektverhältnis entspricht, durch Dividieren einer festen Größe (T0) des Objektdetektionskästchens durch das zumindest eine typische Objektverhältnis;
Skalieren (103) der Trainingsbilder des ersten Trainingsdatensatzes gemäß der zumindest einen Bildskalierungsgröße;
Erlangen (104) eines zweiten Trainingsdatensatzes durch Slicen der skalierten Trainingsbilder basierend auf einer Größe des Eingangsbilds für ein zu trainierendes Objektdetektionsmodell;
Trainieren (105) des Objektdetektionsmodells mithilfe des zweiten Trainingsdatensatzes; und
Durchführen (106) einer Objektdetektion an einem zu detektierenden Bild mithilfe des trainierten Objektdetektionsmodells.

2. Objektdetektionsverfahren nach Anspruch 1, wobei die feste Größe des Objektdetektionskästchens eine optimale Detektionsgröße für das Objektdetektionsmodell aufweist, wobei die optimale Detektionsgröße eine vorgegebene Größe des Objekts ist, für dessen Detektion sich das Objektdetektionsmodell eignet.

3. Objektdetektionsverfahren nach einem der vorstehenden Ansprüche, wobei das Skalieren der Trainingsdatenbilder des ersten Trainingsdatensatzes umfasst:
für jedes Trainingsdatenbild der Trainingsbilder in dem ersten Trainingsdatensatz, Skalieren des Trainingsbilds für jede der zumindest einen Bildskalierungsgröße.

4. Objektdetektionsverfahren nach einem der vorstehenden Ansprüche, wobei das Erlangen des zweiten Trainingsdatensatzes umfasst:

Slicen der skalierten Trainingsbilder, um einen Satz von Trainingsbild-Slices zu erhalten;
Transformieren der den Trainingsbildern zugeordneten Annotationsinformationen des ersten Trainingsdatensatzes, um Annotationsinformationen zu erlangen, die Trainingsbild-Slices des Satzes von Trainingsbild-Slices zugeordnet sind; und
Erzeugen des zweiten Trainingsdatensatzes mit dem Satz von Trainingsbild-Slices und den Annotationsinformationen, die den Trainingsbild-Slices des Satzes von Trainingsbild-Slices zugeordnet sind.

5. Objektdetektionsverfahren nach Anspruch 4, wobei das Slicen der skalierten Trainingsbilder das Verwenden einer Größe eines Eingangsbilds für das Objektdetektionsmodell als Trainingsbild-Slicegröße zum Slicen der skalierten Trainingsbilder umfasst.

6. Objektdetektionsverfahren nach Anspruch 5, wobei das Slicen der skalierten Trainingsbilder ferner das Verwenden eines Bewegungsschritts umfasst, der kleiner ist als eine Differenz zwischen der Größe des Eingangsbilds für das Objektsdetektionsmodell und einer optimalen Detektionsgröße zum Slicen der skalierten Trainingsbilder.

7. Objektdetektionsverfahren nach Anspruch 6, ferner umfassend:
für jedes Trainingsbild-Slice des zweiten Trainingsdatensatzes, Entfernen von Koordinateninformationen, die einem unvollständigen Objektdetektionskästchen über das Trainingsbild-Slice zugeordnet sind, aus den dem Trainingsbild-Slice zugeordneten Annotationsinformationen.

8. Objektdetektionsverfahren nach einem der vorstehenden Ansprüche, wobei der zweite Trainingsdatensatz Trainingsbild-Slices, die ein Objektdetektionskästchen beinhalten, Trainingsbild-Slices, die kein Objektdetektionskästchen beinhalten, sowie Annotationsinformationen, die den Trainingsbild-Slices in dem zweiten Trainingsdatensatz zugeordnet sind, aufweist.

9. Objektdetektionsverfahren nach einem der vorstehenden Ansprüche, wobei das Durchführen der Objektdetektion umfasst:

Skalieren des zu detektierenden Bildes gemäß der zumindest einen Bildskalierungsgröße;
Slicen des zu detektierenden Bildes, um einen Satz von Slices zu detektierender Bilder zu erhalten; und
Eingeben des Satzes von Slices zu detektierender Bilder in das trainierte Objektdetektionsmodell, um die Objektdetektion durchzuführen.

10. Objektdetektionsverfahren nach Anspruch 9, wobei das Slicen des skalierten, zu detektierenden Bildes das Verwenden einer Eingangsbildgröße für das Objektdetektionsmodell als Slice-Größe zum Slicen des skalierten, zu detektierenden Bildes und optional das Verwenden eines Bewegungsschritts, der kleiner ist als eine Differenz zwischen der Eingangsbildgröße für das Objektdetektionsmodell und einer optimalen Detektionsgröße zum Slicen des skalierten, zu detektierenden Bildes umfasst.

11. Objektdetektionsverfahren nach Anspruch 10, wobei das Durchführen der Objektdetektion umfasst:
für jedes Slice des zu detektierenden Bildes des Satzes von Slices zu detektierender Bilder als Reaktion auf das Detektieren, dass das Objektdetektionskästchen einen Rand des Slices des zu detektierenden Bildes überlappt, Verwerfen eines Objektdetektionskästchens auf dem Slice des zu detektierenden Bildes.

12. Objektdetektionsverfahren nach Anspruch 9, wobei das Eingeben des Satzes von Slices zu detektierender Bilder in das trainierte Objektdetektionsmodell zum Durchführen der Objektdetektion umfasst:

Erlangen, unter Verwendung des trainierten Objektdetektionsmodells, von Koordinateninformationen, die jeweiligen Objektdetektionskästchen über Slices zu detektierender Bilder des Satzes von Slices zu detektierender Bilder zugeordnet sind; und
Transformieren der Koordinateninformationen, die jeweiligen Objektdetektionskästchen über Slices zu detektierender Bilder des Satzes von Slices zu detektierender Bilder zugeordnet sind, in Koordinateninformationen, die auf dem zu detektierenden Bild basieren.

13. Objektdetektionsvorrichtung, aufweisend:

ein Bildslice-Konfigurationsmodul (401), das konfiguriert ist, zum:

Bestimmen von zumindest einem typischen Objektverhältnis aus einem ersten Trainingsdatensatz durch Clustern der gezählten Verhältnisse von Objekten in Trainingsdatenbildern des ersten Trainingsdatensatzes, wobei sich ein Objektverhältnis auf eine Proportion einer Größe eines Objektdetektionskästchens des Objekts zu einer Gesamtgröße eines Trainingsbilds bezieht, und wobei ein typisches Objektverhältnis der Wert eines Clusterzentrums ist;

Bestimmen von zumindest einer Bildskalierungsgröße, die eins-zu-eins dem zumindest einen typischen Objektverhältnis entspricht, durch Dividieren einer festen Größe (T0) des Objektdetektionskästchens durch das zumindest eine typische Objektverhältnis; und

Skalieren der Trainingsbilder des ersten Trainingsdatensatzes gemäß der zumindest einen Bildskalierungsgröße;

ein Modelltrainingsmodul (402), das konfiguriert ist, zum:

Erlangen eines zweiten Trainingsdatensatzes durch Slicen der skalierten Trainingsbilder basierend auf einer Eingangsbildgröße für ein zu trainierendes Objektdetektionsmodell; und

Trainieren des Objektdetektionsmodells mithilfe des zweiten Trainingsdatensatzes; und

ein Objektdetektionsmodul (403), das konfiguriert ist, zum:

Durchführen einer Objektdetektion an einem zu detektierenden Bild mithilfe des trainierten Objektdetektionsmodells.

14. Computerprogrammprodukt, aufweisend Programmcodeteile zum Durchführen des Verfahrens nach einem der Ansprüche 1 bis 12, wenn das Computerprogrammprodukt auf einer oder mehr Rechenvorrichtungen ausgeführt wird.

15. Computerlesbares Speichermedium, das ein Computerprogramm speichert, wobei das Computerprogramm, wenn es von einem Prozessor eines Computersystems ausgeführt wird, das Computersystem veranlasst, das Objektdetektionsverfahren nach einem der Ansprüche 1 bis 12 durchzuführen.

**Revendications**

1. Procédé de détection d'objet mis en oeuvre par ordinateur, comprenant

la détermination (101) d'au moins un ratio d'objet typique sur la base d'un premier ensemble de données d'entraînement en regroupant les ratios comptés d'objets sur des images d'entraînement du premier ensemble de données d'entraînement, dans lequel un ratio d'objet se réfère à une proportion d'une taille d'une zone de détection d'objet de l'objet par rapport à une taille totale d'une image d'entraînement, et dans lequel un ratio d'objet typique est la valeur d'un centre de groupe ;

la détermination (102) d'au moins une taille de mise à l'échelle d'image qui correspond une à une à l'au moins un ratio d'objet typique en divisant une taille fixée (T0) de la zone de détection d'objet par l'au moins un ratio d'objet typique ;

la mise à l'échelle (103) des images d'entraînement du premier ensemble de données d'entraînement conformément à l'au moins une taille de mise à l'échelle d'image ;

l'obtention (104) d'un deuxième ensemble de données d'entraînement en découpant en tranches les images d'entraînement mises à l'échelle sur la base d'une taille d'image d'entrée pour un modèle de détection d'objet à entraîner ;

l'entraînement (105) du modèle de détection d'objet en utilisant le deuxième ensemble de données d'entraînement ; et

la réalisation (106) d'une détection d'objet sur une image à détecter en utilisant le modèle de détection d'objet entraîné.

2. Procédé de détection d'objet selon la revendication 1, dans lequel la taille fixée de la zone de détection d'objet comprend une taille de détection optimale pour le modèle de détection d'objet, dans lequel la taille de détection optimale est une taille prédéterminée de l'objet pour laquelle le modèle de détection d'objet est adapté pour la détection.

3. Procédé de détection d'objet selon l'une quelconque des revendications précédentes, dans lequel la mise à l'échelle des images d'entraînement du premier ensemble de données d'entraînement comprend :

pour chaque image d'entraînement des images d'entraînement dans le premier ensemble de données d'entraînement, la mise à l'échelle de l'image d'entraînement à chacune de l'au moins une taille de mise à l'échelle d'image.

**4.** Procédé de détection d'objet selon l'une quelconque des revendications précédentes, dans lequel l'obtention du deuxième ensemble de données d'entraînement comprend :
le découpage en tranches des images d'entraînement mises à l'échelle pour obtenir un ensemble de tranches d'image :

la conversion d'informations d'annotation, associées aux images d'entraînement, du premier ensemble de données d'entraînement pour obtenir des informations d'annotation associées à des tranches d'image d'entraînement de l'ensemble de tranches d'image d'entraînement ; et
la génération du deuxième ensemble de données d'entraînement avec l'ensemble de tranches d'image d'entraînement et les informations d'annotation associées aux tranches d'image d'entraînement de l'ensemble de tranches d'image d'entraînement.

**5.** Procédé de détection d'objet selon la revendication 4, dans lequel le découpage en tranches des images d'entraînement mises à l'échelle comprend l'utilisation d'une taille d'image d'entrée pour le modèle de détection d'objet comme une taille de tranche d'image d'entraînement pour découper en tranches les images d'entraînement mises à l'échelle.

**6.** Procédé de détection d'objet selon la revendication 5, dans lequel le découpage en tranches des images d'entraînement mises à l'échelle comprend en outre l'utilisation d'une étape de déplacement inférieur à une différence entre la taille d'image d'entrée pour le modèle de détection d'objet et une taille de détection optimale pour découper en tranches les images d'entraînement mises à l'échelle.

**7.** Procédé de détection d'objet selon la revendication 6, comprenant en outre :
pour chaque tranche d'image d'entraînement du deuxième ensemble de données d'entraînement, la suppression d'informations de coordonnées associées à une zone de détection d'objet incomplète sur la tranche d'image d'entraînement des informations d'annotation associées à la tranche d'image d'entraînement.

**8.** Procédé de détection d'objet selon l'une quelconque des revendications précédentes, dans lequel le deuxième ensemble de données d'entraînement comprend des tranches d'image d'entraînement qui comportent une zone de détection d'objet, des tranches d'image d'entraînement qui ne comportent pas une zone de détection d'objet, et des informations d'annotation associées aux tranches d'image d'entraînement dans le deuxième ensemble de données d'entraînement.

**9.** Procédé de détection d'objet selon l'une quelconque des revendications précédentes, dans lequel la réalisation de la détection d'objet comprend :

la mise à l'échelle de l'image à détecter conformément à l'au moins une taille de mise à l'échelle d'image ;
le découpage en tranches de l'image mise à l'échelle à détecter pour obtenir un ensemble de tranches d'image à détecter ; et
l'entrée de l'ensemble de tranches d'image à détecter dans le modèle de détection d'objet entraîné pour réaliser la détection d'objet.

**10.** Procédé de détection d'objet selon la revendication 9, dans lequel le découpage en tranches de l'image mise à l'échelle à détecter comprend l'utilisation d'une taille d'image d'entrée pour le modèle de détection d'objet comme une taille de tranche d'image à détecter pour découper en tranches l'image mise à l'échelle à détecter, et en option l'utilisation d'une étape de déplacement inférieur à une différence entre la taille d'image d'entrée pour le modèle de détection d'objet et une taille de détection optimale pour découper en tranches l'image mise à l'échelle à détecter.

**11.** Procédé de détection d'objet selon la revendication 10, dans lequel la réalisation de la détection d'objet comprend :
pour chaque tranche d'image à détecter de l'ensemble de tranches d'image à détecter, le rejet d'une zone de détection d'objet sur la tranche d'image à détecter en réponse à la détection du fait que la zone de détection d'objet chevauche un bord de la tranche d'image à détecter.

**12.** Procédé de détection d'objet selon la revendication 9, dans lequel l'entrée de l'ensemble de tranches d'image à détecter dans le modèle de détection d'objet entraîné pour réaliser la détection d'objet comprend :

l'obtention, en utilisant le modèle de détection d'objet entraîné, d'informations de coordonnées associées à des zones de détection d'objet respectives sur des tranches d'image à détecter de l'ensemble de tranches d'image à détecter ; et
la conversion des informations de coordonnées associées aux zones de détection d'objet respectives sur les tranches d'image à détecter de l'ensemble de tranches d'image à détecter en des informations de coordonnées qui se basent sur l'image à détecter.

**13.** Appareil de détection d'objet comprenant

un module de configuration de découpage en tranches d'image (401) configuré pour :

déterminer au moins un ratio d'objet typique sur la base d'un premier ensemble de données d'entraînement en regroupant les ratios comptés d'objets sur des images d'entraînement du premier ensemble de données d'entraînement, dans lequel un ratio d'objet se réfère à une proportion d'une taille d'une zone de détection d'objet de l'objet par rapport à une taille totale d'une image d'entraînement, et dans lequel un ratio d'objet typique est la valeur d'un centre de groupe ;

déterminer au moins une taille de mise à l'échelle d'image qui correspond une à une à l'au moins un ratio d'objet typique en divisant une taille fixée (T0) de la zone de détection d'objet par l'au moins un ratio d'objet typique ; et

mettre à l'échelle les images d'entraînement du premier ensemble de données d'entraînement conformément à l'au moins une taille de mise à l'échelle d'image ;

un module d'entraînement de modèle (402) configuré pour :

obtenir un deuxième ensemble de données d'entraînement en découpant en tranches les images d'entraînement mises à l'échelle sur la base d'une taille d'image d'entrée pour un modèle de détection d'objet à entraîner ; et

entraîner le modèle de détection d'objet en utilisant le deuxième ensemble de données d'entraînement ; et

un module de détection d'objet (403) configuré pour :
réaliser une détection d'objet sur une image à détecter en utilisant le modèle de détection d'objet entraîné.

**14.** Produit-programme d'ordinateur comprenant des parties de code de programme pour réaliser le procédé selon l'une quelconque des revendications 1 à 12 lorsque le produit-programme d'ordinateur est exécuté sur un ou plusieurs dispositifs informatiques.

**15.** Support de stockage lisible par ordinateur qui stocke un programme informatique, dans lequel le programme informatique, lorsqu'il est exécuté par un processeur d'un système informatique, amène le système informatique à réaliser le procédé de détection d'objet selon l'une quelconque des revendications 1 à 12.

100

```
                        ( Start )
                            │
                            ▼
┌─────────────────────────────────────────────────┐
│ Determining at least one typical object ratio    │
│ from a first training data set by counting        │ ∿  S101
│ ratios of objects in training pictures of the     │
│ first training data set                           │
└─────────────────────────────────────────────────┘
                            │
                            ▼
┌─────────────────────────────────────────────────┐
│ Determining at least one picture scaling size     │
│ based at least on the at least one typical object │ ∿  S102
│ ratio                                             │
└─────────────────────────────────────────────────┘
                            │
                            ▼
┌─────────────────────────────────────────────────┐
│ Scaling the training pictures of the first        │
│ training data set according to the at least one   │ ∿  S103
│ picture scaling size                              │
└─────────────────────────────────────────────────┘
                            │
                            ▼
┌─────────────────────────────────────────────────┐
│ Obtaining a second training data set by slicing   │ ∿  S104
│ the scaled training pictures                      │
└─────────────────────────────────────────────────┘
                            │
                            ▼
┌─────────────────────────────────────────────────┐
│ Training an object detection model using the      │ ∿  S105
│ second training data set                          │
└─────────────────────────────────────────────────┘
                            │
                            ▼
┌─────────────────────────────────────────────────┐
│ Performing object detection on a to-be-detected   │ ∿  S106
│ picture using the trained object detection model  │
└─────────────────────────────────────────────────┘
                            │
                            ▼
                        ( End )
```

*Fig. 1*

*Fig. 2a*

*Fig. 2b*

Scaling the to-be-detected picture according to the at least one picture scaling size — S1061

Slicing the scaled to-be-detected picture to obtain a set of to-be-detected image slices — S1062

Inputting the set of to-be-detected image slices to the trained object detection model to perform the object detection — S1063

*Fig. 3*

| Picture slicing configuration module 401 | Model training module 402 | Object detection module 403 |

400

*Fig. 4*

*Fig. 5*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- Exploit All the Layers: Fast and Accurate CNN Object Detector with Scale Dependent Pooling and Cascaded Rejection Classifiers. **YANG FAN et al.** 2016 IEEE CONFERENCE ON COMPUTER VISION AND PATTERN RECOGNITION (CVPR). IEEE, 27 June 2016, 2129-2137